# EUROPEAN PATENT APPLICATION

(11) **EP 4 814 396 A1**
(43) Date of publication of application: **30.09.2026**
(21) Application number: 25305415.9
(22) Date of filing: 24.03.2025
(51) Int. Cl.: F24F 11/00, A01K 1/00, F24F 11/72, F24F 11/74, F24F 11/80, F24F 120/10, F24F 120/12, F24F 110/10

(54) **SYSTEM AND METHOD FOR CONTROLLING ENVIRONMENTAL CONDITIONS IN AN ENCLOSED SPACE OCCUPIED BY LIVING BEINGS**

(71) Applicant: SCHNEIDER ELECTRIC INDUSTRIES SAS, 92500 Rueil-Malmaison (FR)
(72) Inventor: MALBRANCQ, Adrien, 06950 FALICON (FR); BONSIGNOUR, Eric, 91310 MONTLHERY (FR)
(74) Representative: Plasseraud IP

(57) **Abstract**

The invention relates to a method for controlling environmental conditions in an enclosed space occupied by living beings by delivering supply air with a controlled airflow and controlled temperature to at least one zone of the enclosed space, the method comprising:
- capturing (S1) images from at least one infrared camera positioned to monitor the enclosed space;
- analyzing (S2) the captured images to detect the number and location of the living beings within at least one zone of the enclosed space;
- measuring (S3) a temperature of the living beings from the infrared camera data;
- computing (S4) an airflow and/or temperature of supply air to be delivered to at least one zone based on at least the measured temperature and the number of the living beings;
- selecting (S5) at least one zone for delivery of the supply air; and
- adjusting (S6) the airflow and/or the temperature of the supply air delivered into the selected zone to achieve desired environmental conditions for the living beings.

## Description

### Technical Field

The present document relates generally to a method for controlling environmental conditions in an enclosed space occupied by living beings by delivering supply air with a controlled airflow and controlled temperature to at least one zone of the enclosed space. The invention also relates to a system for controlling environmental conditions in an enclosed space that houses living beings.

### Prior art

In recent years, increased demand for food security, sustainability, and enhanced animal welfare has led to the widespread adoption of large-scale farming infrastructures, commonly referred to as "mega-farms." These facilities, designed to accommodate hundreds or even thousands of animals, face significant challenges in managing environmental conditions such as temperature, humidity, light and air quality. Similar challenges exist in large spaces occupied by humans, including transportation hubs like train stations and airports, public venues, convention halls, and waiting areas.

Traditional approaches to managing ambient conditions typically involve centralized automated systems that uniformly regulate the entire space or predefined zones using distributed sensors for temperature, humidity, carbon dioxide (CO₂), methane (CH₄), and other parameters. However, these systems have inherent limitations. They necessitate extensive sensor deployment and wiring infrastructures, leading to high installation costs, increased operational expenditures, and frequent maintenance issues. Moreover, positioning all these analog sensors at locations where they simultaneously provide relevant measurements of the tracked parameters and remain protected from damage is challenging, further complicating installation and reliability. Furthermore, because animals or human occupants are rarely distributed evenly and remain highly mobile within these spaces, conventional solutions are often inefficient, resulting in unnecessary energy consumption, suboptimal comfort, and inadequate responsiveness to actual occupancy patterns.

Thus, there is a pressing need for an innovative solution capable of dynamically and precisely adjusting environmental conditions in real-time, closely aligned with actual occupancy distribution and localized thermal requirements, while significantly reducing the number of required sensors, associated maintenance complexity, and overall energy usage.

In addition to agricultural applications, the principles underlying this innovative approach are equally pertinent to human-occupied environments, particularly those characterized by fluctuating occupancy patterns and large spatial dimensions. Public infrastructures such as airports, train stations, shopping malls, theaters, exhibition halls, and similar venues face similar challenges in maintaining optimal environmental comfort efficiently. Traditional centralized climate control methods in these contexts often result in excessive energy use and suboptimal occupant comfort due to their inability to adapt dynamically to real-time occupancy distributions.

### Summary

To this end, the present document concerns a method for controlling environmental conditions in an enclosed space occupied by living beings by delivering supply air with a controlled airflow and controlled temperature to at least one zone of the enclosed space, the method comprising:
- capturing images from at least one infrared camera positioned to monitor the enclosed space;
- analyzing the captured images to detect the number and location of the living beings within at least one zone of the enclosed space;
- measuring a temperature of the living beings from the infrared camera data;
- computing an airflow and/or temperature of supply air to be delivered to at least one zone based on at least the measured temperature and the number of the living beings;
- selecting at least one zone for delivery of the supply air; and
- adjusting the airflow and/or the temperature of the supply air delivered into the selected zone to achieve desired environmental conditions for the living beings.

Controlling environmental conditions refers to the process of actively managing and regulating factors such as temperature, humidity, air quality, airflow, gas concentrations (e.g., CO₂, CH₄), and related parameters within a designated space.

An enclosed space refers to a substantially bounded area separated from external conditions by walls, ceilings, floors, or similar structural elements. It includes spaces such as buildings, barns, greenhouses, or other confined structures, wherein external climatic factors are controlled or mitigated to maintain desired internal environmental conditions. Such spaces typically include walls, roofs, doors, windows, or other barriers that limit airflow or heat transfer with the external environment.

Living beings, as used herein, refers to organisms capable of life, growth, and metabolism, including but not limited to animals (e.g., cattle, poultry, pets), humans, and potentially other organisms whose physiological well-being and comfort depend on environmental factors such as temperature, humidity, air quality, light and ventilation. The term particularly applies to occupants whose well-being, productivity, health, or comfort benefits directly from environmental regulation within the enclosed space.

Supply air denotes air introduced into an enclosed space for the purpose of maintaining or adjusting environmental conditions, such as temperature, humidity, air quality, and gas composition. The supply air may be treated by heating, cooling, humidification, dehumidification, filtration, or purification before introduction into the targeted zone. Supply air is typically delivered via mechanical or natural ventilation systems and distributed through ducts, vents, diffusers, or other airflow management structures.

The term "zone" refers to a specifically defined subsection or segment within an enclosed space that can be individually monitored, controlled, or regulated regarding environmental conditions. Zones are typically created to reflect localized variations in occupancy, thermal loads, airflow needs, or other criteria. These zones are not necessarily physically delimited by structural barriers; rather, they may have a metric delimitation only, being defined virtually based on spatial coordinates or measurement criteria.

Capturing images refers to the process of acquiring visual or thermal representations of scenes or objects within a monitored area using imaging devices. The images may be captured in various formats, including photographic, digital, or thermal imagery, and can subsequently be stored, processed, analyzed, or interpreted by automated or semi-automated methods to extract relevant data for controlling environmental conditions.

An "infrared camera" is a device designed to detect and capture infrared radiation emitted by objects, converting it into visual representations of thermal energy. Infrared cameras measure temperature variations and produce images or video footage that visually represent the surface temperature distribution of observed objects or living beings. These cameras are commonly utilized to monitor living beings, identify their location, and determine their thermal characteristics without contact.

Analyzing the captured images refers to processing the acquired visual or thermal images using software algorithms, image-processing methods, or artificial intelligence techniques. The goal of this analysis is to extract meaningful information, such as counting or locating living beings, determining occupancy patterns, and measuring surface temperatures or temperature gradients. Analysis may include advanced processing techniques like object recognition, segmentation, or predictive modeling.

Computing, within the context described herein, refers to executing calculations, algorithms, or computational processes to derive specific outputs, decisions, or predictions based on data inputs. Specifically, it includes determining appropriate airflow, temperature settings, or other parameters, based on input data from sensors, captured images, predictive models, or environmental conditions. Computing may involve the use of algorithms, mathematical models, digital processors, or other processing units for real-time or near-real-time environmental management.

Selecting at least one zone, as defined herein, involves the decision-making or identification process used to determine specific zones or spatial areas within the enclosed space that require environmental conditioning.

The present method significantly improves energy efficiency by dynamically regulating environmental conditions specifically within zones occupied by living beings, rather than uniformly conditioning the entire enclosed space. By focusing on airflow and temperature adjustments only where necessary, energy consumption is substantially reduced.

Said method also ensures that optimal environmental conditions are maintained in real-time, closely aligned with the actual presence and specific needs of living beings within the enclosed space. Continuous monitoring of occupancy and temperature through infrared imaging facilitates timely adjustments of supply air, thereby enhancing the overall comfort, welfare, and productivity of living beings, and potentially improving health outcomes.

Utilizing infrared cameras to detect occupancy and measure temperatures substantially reduces the need for extensive sensor deployment and associated wiring infrastructure. In addition, such cameras also provide superior reliability and accuracy compared to traditional sensor-based approaches. Infrared imaging offers precise detection of the number, location, and temperature of living beings, enabling more effective and responsive environmental management. The accuracy and robustness of this system reduce potential errors associated with sensor placement, damage, or malfunction common in traditional installations.

In addition, due to the minimized number of sensors and reduced associated wiring, the presented solution allows simpler and less frequent maintenance activities, significantly decreasing operational complexity.

The method also exhibits high scalability and modularity, easily adapting to various sizes and layouts of enclosed spaces. Infrared cameras and the associated control logic can be flexibly scaled, ensuring consistent performance in environments ranging from smaller buildings to large mega-farms. This modularity simplifies adaptation, installation, and expansion processes.

The method may comprise using at least one air extraction point located in at least one zone within the enclosed space. Each extraction point may be positioned to enable efficient removal of exhaust air, optimizing localized ventilation effectiveness based on real-time occupancy and thermal load within that specific zone.

Each air extraction point may be equipped with a dedicated drive or actuator, such as a motor, configured to dynamically regulate the airflow rate according to control signals received from a centralized or distributed processing unit. However, in certain implementations, air extraction points do not individually regulate airflow per zone, as the operation of fans inherently produces convection currents that lead to air mixing within the barn. Consequently, the air within each zone may naturally blend, and the system monitors global may trend in the extracted air rather than relying solely on discrete, zone-specific measurements.

The method may comprise using cooling units to produce conditioned (cooled) supply air. Cooling output may directly be regulated in accordance with the total airflow demand required by the extraction points. Specifically, the cooling production rate may be controlled in relation to the total extraction airflow rate demanded by the extraction points. Thus, the cooling energy supplied may match actual thermal load requirements closely, minimizing energy waste and optimizing operational costs.

Multiple cooling or refrigeration units may be arranged in a redundant configuration. This redundancy ensures continuous operation and stable environmental conditions within the enclosed space in the event of a failure or downtime of one or more cooling units. Such redundancy enhances the overall robustness of the environmental control installation.

The airflow of supply air may be calculated by means of a model that takes into account the thermal power emitted by the living beings (*Q*ₜₕ), said thermal power being determined from the temperature and the number of living beings detected in the respective zone.

This approach enables precise adaptation of the airflow to the actual heat generated by living beings within each zone. By dynamically aligning environmental conditions to real occupancy and thermal loads, it significantly reduces unnecessary energy consumption, ensuring both optimized living being welfare and operational efficiency.

The inlet air temperature *T*ₐᵢᵣ₋ᵢₙ may be monitored through a sensor, the model being in the form of ${Q}_{{v}_{i}} \geq \frac{{N}_{i} ⋅ {Q}_{th}}{h \times \left({T}_{{s}_{i}}-{T}_{air - in}\right)} .$ where :
- *Q_{vᵢ}* is the volumetric airflow delivered to each zone i to be adjusted,
- *i* the index of a zone,
- *Nᵢ* is the number of living beings detected in the zone "*i*"
- *Q*ₜₕ is the average heat dissipated by one living being
- *h* is the convection coefficient,
- *T_{sᵢ}* is the average surface temperature of living beings in zone *i*,
- *T*ₐᵢᵣ₋ᵢₙ is the inlet air temperature.

The computation of an airflow of supply air to be delivered to at least one zone may take into account the concentration of at least one gas, such as CO₂ and/or CH₄, measured by at least one gas sensor. Initially, gas concentration measurements may serve primarily as a monitoring function, comparing observed values against predefined thresholds to verify that no accumulation occurs within the enclosed space. Since airflow induced by the fans may results in substantial mixing of air between zones, gas concentration monitoring may be conducted globally rather than exclusively at zone level. Although the primary intention is monitoring and comparison, it is conceivable that these gas concentrations may subsequently be integrated into computational models, especially as the system learns and evolves based on collected operational data.

Incorporating measurements of gas concentrations, such as CO₂ and CH₄, allows for enhanced air quality management within each zone. This ensures optimal conditions for health and welfare, while efficiently controlling ventilation to minimize energy use.

The computation of an airflow of supply air to be delivered to at least one zone may take into account the external temperature, measured by at least one external temperature sensor.

Integrating measurements of external air temperature into the airflow computation optimizes the ventilation strategy by using external air when suitable, thereby reducing reliance on artificial heating or cooling systems.

The computation of an airflow of supply air to be delivered to at least one zone may take into account additional heat fluxes within the enclosed space, including heat gains or losses through the enclosure's thermal envelope and/or other internal heat sources, such as lighting heat emission.

The global thermal balance within the enclosed space may be described by the following equation: ${\sum }_{j} {Q}_{{th}_{j}} + {Q}_{{th}_{leds}} + {P}_{{th}_{build}} = {\sum }_{i} {Q}_{vi} ⋅ Cp ⋅ \left({T}_{air - out}-{T}_{air - in}\right)$ where:
- *Σⱼ Q_{thⱼ}* represents the total heat dissipated by all living beings within all monitored zones. This term is calculated based on the number of living beings detected, their average surface temperature, and their specific metabolic heat emission.
- *Q_{th_{leds}}* corresponds to the total thermal power emitted by lighting equipment (e.g., LED lights) within the enclosed space. This heat gain is determined from the electrical power consumption and thermal efficiency of the lighting fixtures.
- *P_{th_{build}}* refers to the net thermal flux resulting from heat exchanges through the building envelope (walls, roof, and floor). It encompasses heat gains or losses due to thermal conduction, convection, and radiation between the interior and external environment, based on the insulation quality and external temperature conditions.
- Σ*ᵢ Qᵥᵢ* is the total volumetric airflow distributed into different zones, dynamically regulated to maintain optimal environmental conditions. Individual airflows *Qᵥᵢ* are computed using the described mathematical model based on measured parameters (living beings temperature, occupancy, external conditions, etc.).
- *Cp* represents the specific heat capacity of air, a constant value used to quantify the energy required to change the air temperature by one degree (typically approximately 1005 J/kg.K).
- *Tₐᵢᵣ₋ₒᵤₜ* denotes the temperature of air exiting the enclosed space after absorbing heat from the occupants and internal sources, measured by appropriate temperature sensors positioned at air extraction points.
- *Tₐᵢᵣ₋ᵢₙ* represents the temperature of incoming air introduced into the enclosed space, typically regulated below a defined threshold (e.g., ideally below 15°C), ensuring efficient heat removal and energy optimization.

This equation summarizes the fundamental principle of energy balance within the controlled environment, ensuring that the heat generated internally (by living beings, lighting, and external heat transfer) is precisely compensated by the airflow provided, thus optimizing both occupant comfort and energy consumption.

The method may further comprise measuring a humidity level in the enclosed space with at least one humidity sensor, and adjusting the airflow and/or temperature of the supply air to ensure that a target humidity range is maintained for the living beings.

By continuously monitoring humidity levels within the enclosed space, the method ensures environmental conditions remain within optimal humidity ranges. This dynamic adjustment of airflow and temperature prevents discomfort and health issues for the living beings, while simultaneously enhancing the overall energy efficiency of the environmental control system.

In the event of failure or unavailability of at least one sensor or camera in a given zone, the airflow for that zone may be regulated according to a default or fallback setpoint, while the airflow in other zones may be adjusted to maintain overall environmental conditions for the living beings.

In case of sensor or camera failure within a particular zone, airflow control in that zone defaults to a predefined fallback setpoint, maintaining basic comfort conditions. Simultaneously, airflow adjustments in neighboring zones compensate to ensure stable overall environmental conditions, thereby preserving the comfort and well-being of living beings throughout the enclosed space.

The number of living beings occupying each monitored zone within the enclosed environment can be determined through advanced image-processing algorithms applied to data obtained from infrared cameras. These algorithms may include object detection techniques, such as deep learning-based models (e.g., convolutional neural networks or YOLO-based models), capable of identifying, segmenting, and counting individual living beings based on their thermal signature and shape characteristics.

The raw thermal images of the camera may undergo a calibration step to normalize temperature readings, compensating for potential variations in camera sensor performance or ambient background radiation. This calibration may involve comparing known reference points in the field of view (e.g., specific objects or surfaces with stable, monitored temperatures) to the live data feed.

A background subtraction or model-based segmentation algorithm may be applied to isolate moving or thermally distinct subjects from the surrounding scene. This step allows the system to distinguish living beings, which generally exhibit higher or more dynamic temperature profiles, from inanimate objects. By updating the background thermal model over time, the system can account for slow temperature drifts in flooring, walls, or equipment, thus improving detection accuracy. In certain embodiments, an adaptive threshold technique is used so that abrupt changes in ambient temperature or sudden drafts do not trigger false positives.

In situations where living beings partially occlude one another-particularly relevant in high-density animal facilities or busy human-occupied environments-advanced techniques such as stereo infrared vision or multi-camera fusion may be employed. When multiple infrared cameras are positioned at complementary angles, overlapping thermal data can be combined to construct partial three-dimensional (3D) reconstructions of the scene. This multi-view approach facilitates improved identification and counting of individuals by reconstructing depth information, thereby mitigating errors due to overlapping silhouettes or closely spaced subjects.

Additionally, the system may deploy optical flow or motion-tracking algorithms that link successive frames in a video stream, enabling the prediction of an individual's position even when temporarily obscured. By inferring continuous movement trajectories, the image-processing system can maintain more reliable counts of occupants despite dynamic interactions and partial blockages.

Beyond simple occupancy counting, thermal patterns may be analyzed on a more granular level to derive estimates of an individual's overall health status or stress level. Small local temperature anomalies in specific body regions (such as hot spots or cooler extremities) might be detected through a higher-resolution infrared camera or a specialized software module. In agricultural settings, such data can help detect early signs of illness or discomfort (e.g., heat stress in dairy cows). For human-occupied environments (e.g., public spaces), it may assist in security screening or crowd management by identifying abnormal temperature readings.

In some implementations, the algorithm can utilize machine learning techniques trained on typical thermal profiles of the species or population in question. By comparing real-time measurements against these reference profiles, the software can flag anomalies that warrant further attention or adjustment of environmental parameters.

Although primary detection is achieved through infrared imaging, the system may integrate additional spectral bands or conventional (visible-light) cameras to enhance the robustness of the analysis. For instance, in low-humidity environments, infrared imagery alone may sometimes be affected by reflective surfaces or extreme temperature gradients. By fusing data from both infrared and visible-light sensors, the system can more accurately segment each living being's contour, especially if backgrounds or objects in the space have similar thermal signatures.

Moreover, for scenarios where the lighting conditions are variable (e.g., automatic dimming, nighttime lighting, or high-intensity LED fixtures), the system may rely primarily on the infrared channel to reduce the impact of lighting changes on occupancy detection. A built-in self-check routine may use the visible-light camera only to confirm basic scene context (e.g., large obstructions or intrusions) while the main regulation logic continues to depend on the thermal data.

The described system may also integrate advanced analytics that learn temporal or seasonal patterns in occupant distribution and thermal demand. For instance, machine learning algorithms could anticipate certain periods of high occupancy in a public venue or feeding times in a barn environment. Using historical data, the system can preemptively adjust airflow rates and cooling or heating setpoints to minimize abrupt changes or energy spikes. Such predictive control strategies help optimize overall efficiency and comfort, extending the core occupancy-based control logic to a more holistic, data-driven environmental management approach.

The present document also concerns a system for controlling environmental conditions in an enclosed space that houses living beings, the system comprising:
- at least one infrared camera configured to capture images of the enclosed space;
- at least one processing unit operably connected to the infrared camera, the processing unit being configured to implement the method according to the preceding claims.

The system may comprise multiple processing units configured redundantly, ensuring continuous and reliable operation of environmental control in case of failure or maintenance of any single processing unit.

The control system may include a secure data management layer that transmits processed occupancy and temperature information to a centralized or cloud-based platform. This platform can aggregate data across multiple enclosed spaces or multiple sites, allowing facility managers or operators to monitor conditions in real-time and compare performance metrics, such as energy consumption or animal comfort indices, across different buildings or time periods. Encrypted communication protocols (e.g., TLS/SSL) may be utilized to protect sensitive operational and occupancy data, ensuring compliance with relevant data privacy regulations.

A distributed architecture may be implemented where each zone features a local microcontroller capable of basic environmental control decisions if disconnected from a central processing unit. This ensures that local ventilation or temperature adjustments continue autonomously, maintaining essential comfort conditions. Once communication is restored, the local controllers may synchronize with the central processor, providing an uninterrupted operational flow despite intermittent network or hardware issues.

### Brief description of the drawings

Other features, details and advantages will become apparent from the detailed description below, and from an analysis of the attached drawings, in which:
[Fig. 1] is a schematic diagram illustrating an embodiment of method according to the present document.
[Fig. 2] is a schematic diagram of an environmental control system within an enclosed space.

### Detailed description of the drawings

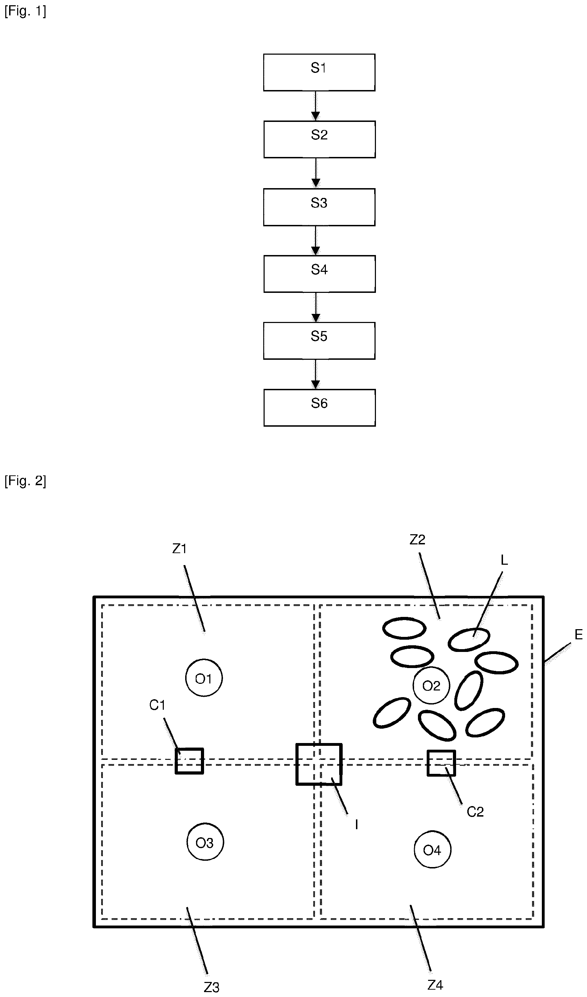

Figure 1 illustrates a method for controlling environmental conditions in an enclosed space occupied by living beings by delivering supply air with a controlled airflow and controlled temperature to at least one zone of the enclosed space, the method comprising:
- capturing (S1) images from at least one infrared camera positioned to monitor the enclosed space;
- analyzing (S2) the captured images to detect the number and location of the living beings within at least one zone of the enclosed space;
- measuring (S3) a temperature of the living beings from the infrared camera data;
- computing (S4) an airflow and/or temperature of supply air to be delivered to at least one zone based on at least the measured temperature and the number of the living beings;
- selecting (S5) at least one zone for delivery of the supply air; and
- adjusting (S6) the airflow and/or the temperature of the supply air delivered into the selected zone to achieve desired environmental conditions for the living beings.

Figure 2 illustrates an environmental control system within an enclosed space, designed to optimize conditions for living beings, such as animals like cows. The space is divided into distinct zones, each equipped with specific components to ensure precise and efficient environmental regulation.

The enclosed space E is segmented into multiple zones, labeled Z1 through Z4, each bordered by dashed lines. These zones are individually monitored and controlled to maintain optimal environmental conditions tailored to the needs of the occupants. Key elements within these zones include air extraction points, denoted as O1 through O4, which are responsible for removing exhaust air from the space. These extraction points are equipped with actuators, such as motors, which are controlled by drives that receive command signals. This setup allows for dynamic regulation of airflow, optimizing localized ventilation based on real-time occupancy and thermal load within each zone.

At the center of the space, an air inlet, marked as I, serves as the entry point for conditioned (cooled) supply air. This inlet is crucial for introducing air at the desired temperature, ensuring that the environment remains comfortable for the occupants. The centralized positioning of the inlet facilitates efficient distribution of air throughout the various zones.

Living beings, represented by L, such as animals like cows, occupy the zones. Their presence and thermal characteristics are monitored using infrared cameras, labeled C1 and C2, which may be strategically placed in at height within the building. These cameras capture thermal images that are analyzed to detect the number, location, and temperature of the living beings. This data is used for computing the necessary adjustments to airflow and temperature to ensure the comfort and well-being of the occupants.

In addition to the infrared cameras, the system may incorporate other sensors, such as gas sensors for measuring concentrations of gases like CO₂ and CH₄, humidity sensors, and external temperature sensors. These sensors and the cameras, although not depicted in the figure, are connected to a processing unit that analyzes the collected data. The processing unit uses this information to regulate the extraction of air (through the drives for example) and the temperature of the incoming air, ensuring that the environmental conditions are optimized in real-time.

The integration of these components-air extraction points with actuators, a central air inlet, infrared cameras, and various sensors connected to a processing unit-creates a dynamic and responsive system. This setup allows for precise and efficient environmental control, enhancing the overall welfare of the living beings within the enclosed space.

## Claims

1. A method for controlling environmental conditions in an enclosed space occupied by living beings by delivering supply air with a controlled airflow and controlled temperature to at least one zone of the enclosed space, the method comprising:
- capturing (S1) images from at least one infrared camera positioned to monitor the enclosed space;
- analyzing (S2) the captured images to detect the number and location of the living beings within at least one zone of the enclosed space;
- measuring (S3) a temperature of the living beings from the infrared camera data;
- computing (S4) an airflow and/or temperature of supply air to be delivered to at least one zone based on at least the measured temperature and the number of the living beings;
- selecting (S5) at least one zone for delivery of the supply air; and
- adjusting (S6) the airflow and/or the temperature of the supply air delivered into the selected zone to achieve desired environmental conditions for the living beings.

2. The method according to the preceding claim, wherein the airflow of supply air is calculated by means of a model that takes into account the thermal power emitted by the living beings (*Q*ₜₕ), said thermal power being determined from the temperature and the number of living beings detected in the respective zone.

3. The method according to any of the preceding claims, wherein the inlet air temperature *T*ₐᵢᵣ₋ᵢₙ is monitored through a sensor, the model being in the form of ${Q}_{{v}_{i}} \geq \frac{{N}_{i} ⋅ {Q}_{th}}{h \times \left({T}_{{s}_{i}}-{T}_{air - in}\right)} .$ where:
- *Q_{vᵢ}* is the volumetric airflow delivered to each zone i to be adjusted,
- *i* the index of a zone,
- *Nᵢ* is the number of living beings detected in the zone "*i*"
- *Qₜₕ* is the average heat dissipated by one living being
- *h* is the convection coefficient,
- *T_{sᵢ}* is the average surface temperature of living beings in zone *i*,
- *T*ₐᵢᵣ₋ᵢₙ is the inlet air temperature.

4. The method according to any of the preceding claims, wherein the computation of an airflow of supply air to be delivered to at least one zone takes into account the concentration of at least one gas, such as CO₂ and/or CH₄, measured by at least one gas sensor.

5. The method according to any of the preceding claims, wherein the computation of an airflow of supply air to be delivered to at least one zone takes into account the external temperature, measured by at least one external temperature sensor.

6. The method according to any of the preceding claims, wherein the computation of an airflow of supply air to be delivered to at least one zone takes into account additional heat fluxes within the enclosed space, including heat gains or losses through the enclosure's thermal envelope and/or other internal heat sources, such as lighting heat emission.

7. The method according to any of the preceding claims, further comprising measuring a humidity level in the enclosed space with at least one humidity sensor, and adjusting the airflow and/or temperature of the supply air to ensure that a target humidity range is maintained for the living beings.

8. The method according to any of the preceding claims, wherein, in the event of failure or unavailability of at least one sensor or camera in a given zone, the airflow for that zone is regulated according to a default or fallback setpoint, while the airflow in other zones is adjusted to maintain overall environmental conditions for the living beings.

9. A system for controlling environmental conditions in an enclosed space that houses living beings, the system comprising:
- at least one infrared camera configured to capture images of the enclosed space;
- at least one processing unit operably connected to the infrared camera, the processing unit being configured to implement the method according to the preceding claims.
